# EUROPÄISCHE PATENTSCHRIFT

(11) **EP 3 721 542 B1**
(45) Veröffentlichungstag und Bekanntmachung des Hinweises auf die Patenterteilung: **18.01.2023**
(21) Anmeldenummer: 18808291.1
(22) Anmeldetag: 22.11.2018
(51) Int. Cl.: H02M 3/28, H01F 38/00, H01F 30/04

(54) **DREIPORT-SPANNUNGSWANDLER MIT EINEM TRANSFORMATOR**
THREE-PORT VOLTAGE CONVERTER WITH TRANSFORMER
CONVERTISSEUR DE TENSION À TROIS PORTS AVEC TRANSFORMATEUR

(30) Priorität: 06.12.2017 DE 102017222087
(43) Veröffentlichungstag der Anmeldung: 14.10.2020
(73) Patentinhaber: Robert Bosch GmbH, 70442 Stuttgart (DE)
(72) Erfinder: KOLAR, Johann W., 8044 Zürich (CH); SCHAEFER, Jannik Robin, 8820 Wädenswil (CH); BORTIS, Dominik, 8052 Zürich (CH)
(86) Internationale Anmeldenummer: PCT/EP2018/082171
(87) Internationale Veröffentlichungsnummer: WO 2019/110314

(56) Entgegenhaltungen:
- EP-A1- 3 203 624
- US-A- 5 737 203
- US-A1- 2005 270 806
- US-A1- 2015 357 116

## Beschreibung

Die vorliegende Erfindung betrifft einen Dreiport-Spannungswandler mit einem Transformator.

### Stand der Technik

Die Druckschrift DE 10 2014 220 434 A1 offenbart einen Gleichstrom-Gleichstrom-Wandler mit einer Mehrzahl parallel geschalteter Resonanzwandler. Die Anzahl der Resonanzwandler, die Energie von einer Primärseite zu einer Sekundärseite übertragen, hängt hierbei von der Leistungsaufnahme einer sekundärseitigen Last ab. Die Druckschriften EP 3 203 624 A1, US 5 737 203 A, US 2015 / 357 116 A1 und US 2005 / 270 806 A1 offenbaren Mehrportwandler und Ansteuerverfahren dazu.

Elektro- und Hybridfahrzeuge weisen in der Regel zwei verschiedene Bordnetze auf. In einem Niederspannungsnetz, welches durch einen Akkumulator gepuffert wird, werden in der Regel alle Niederspannungsverbraucher wie z.B. Bordcomputer, Lichteinheiten und Unterhaltungselektronik versorgt. Darüber hinaus liefert ein Hochspannungsnetz, welches durch einen Hochvolt-Akkumulator gespeist wird, elektrische Energie für den Antrieb. Insbesondere kann die elektrische Energie für das Niederspannungsnetz von der Hochspannungsseite bereitgestellt werden. Hierzu können Gleichspannungswandler eingesetzt werden, welche aus sicherheitstechnischen Gründen eine galvanische Trennung zwischen dem Hochspannungsnetz und dem Niederspannungsnetz aufweisen müssen.

Darüber hinaus können die Akkumulatoren eines Elektro- oder Hybridfahrzeugs über eine externe Spannungsversorgung geladen werden. Auch hierzu ist aus sicherheitstechnischen Gründen eine galvanische Trennung vorzusehen, sodass in der Summe drei voneinander jeweils galvanisch getrennte Spannungssysteme existieren.

### Offenbarung der Erfindung

Die vorliegende Erfindung offenbart einen Dreiport-Spannungswandler mit den Merkmalen des Patentanspruchs 1.

Demgemäß ist vorgesehen: Ein Dreiport-Spannungwandler mit einem Transformator mit einem ersten ringförmigen Transformatorkern, einem zweiten ringförmigen Transformatorkern, einer ersten Primärwicklung, einer zweiten Primärwicklung, einer ersten Sekundärwicklung, einer zweiten Sekundärwicklung und einer Tertiärwicklung. Die erste Primärwicklung ist an dem ersten Transformatorkern angeordnet. Die zweite Primärwicklung ist an dem zweiten Transformatorkern angeordnet. Die erste Sekundärwicklung ist an dem ersten Transformatorkern angeordnet. Die zweite Sekundärwicklung ist an dem zweiten Transformatorkern angeordnet. Die Tertiärwicklung schließlich ist sowohl an dem ersten Transformatorkern und dem zweiten Transformatorkern angeordnet. Unter dem Begriff "angeordnet" ist insbesondere zu verstehen, dass die jeweilige Wicklung um den jeweiligen Transformatorkern herum gewickelt ist. Als ringförmiger Transformatorkern ist beispielsweise eine geschlossene Transformatorkernstruktur, insbesondere eine toroidförmige oder rechteckförmige Transformatorkernstruktur möglich.

Weiterhin ist der Dreiport-Spannungswandler vorgesehen mit einer ersten Ansteuerschaltung, einer zweiten Ansteuerschaltung und einer Gleichrichterschaltung. Die erste Ansteuerschaltung ist dazu ausgelegt, an der ersten Primärwicklung eine erste Wechselspannung bereitzustellen und an der zweiten Primärwicklung eine zweite Wechselspannung bereitzustellen. Die zweite Ansteuerschaltung ist dazu ausgelegt, eine an der ersten Sekundärwicklung anliegende Wechselspannung gleichzurichten und auch eine an der zweiten Sekundärwicklung anliegende Wechselspannung gleichzurichten. Insbesondere kann die zweite Ansteuerschaltung die gleichgerichteten Spannungen an einem Ausgangsanschluss als Gleichspannung bereitstellen.

Ferner kann die zweite Ansteuerschaltung dazu ausgelegt sein, an der ersten Primärwicklung eine erste Wechselspannung bereitzustellen und an der zweiten Primärwicklung eine zweite Wechselspannung bereitzustellen. Die Gleichrichterschaltung kann dazu ausgelegt sein, eine an der Tertiärwicklung anliegende Wechselspannung gleichzurichten. Die gleichgerichtete Wechselspannung kann an einem Ausgangsanschluss der Gleichrichterschaltung bereitgestellt werden.

Ferner ist beschrieben, jedoch nicht beansprucht:
Ein Verfahren zum Übertragen von elektrischer Energie mit einem Transformator des Dreiport-Spannungswandlers, mit den Schritten des Bereitstellens einer ersten Wechselspannung an der ersten Primärwicklung und des Bereitstellens einer zweiten Wechselspannung an der zweiten Primärwicklung mit einer zeitlichen Verzögerung in Bezug auf das Bereitstellen der ersten Wechselspannung. Die zeitliche Verzögerung kann insbesondere in Abhängigkeit von einer Sollspannung an der Tertiärwicklung eingestellt werden.

Schließlich ist beschrieben, jedoch nicht beansprucht:
Ein Verfahren zum Übertragen von elektrischer Energie mit einem Transformator des Dreiport-Spannungswandlers, mit den Schritten des Bereitstellens einer ersten Wechselspannung an der ersten Sekundärwicklung und des Bereitstellens einer zweiten Wechselspannung an der zweiten Sekundärwicklung. Dabei kann ein magnetischer Fluss, der von der ersten Wechselspannung in dem ersten Transformatorkern hervorgerufen wird, und ein magnetischer Fluss, der von der zweiten Wechselspannung in dem zweiten Transformatorkern hervorgerufen wird, in einem von der Tertiärwicklung umgebenen Bereich des zweiten Transformatorkerns in die gleiche Richtung verlaufen.

### Vorteile der Erfindung

Der vorliegenden Erfindung liegt die Erkenntnis zugrunde, dass Elektro- und Hybridfahrzeuge in der Regel drei voneinander getrennte Spannungssysteme aufweisen. Neben einem Niederspannungsbordnetz und einem Hochspannungsbordnetz des Fahrzeugs existiert weiterhin ein Anschluss zum Einspeisen von elektrischer Energie für das Aufladen der Akkumulatoren in dem Fahrzeug. Alle diese drei Bordnetze sind hierbei voneinander galvanisch zu trennen. Für die galvanisch getrennte Kopplung der drei Spannungssysteme ist dabei eine kostengünstige und effiziente Kopplung wünschenswert.

Der vorliegenden Erfindung liegt daher die Idee zugrunde, dieser Erkenntnis Rechnung zu tragen und die drei Spannungssysteme mittels eines galvanisch trennenden Spannungskonverters miteinander zu koppeln. Dies kann insbesondere durch die Verwendung eines gemeinsamen Transformators mit fünf separaten Wicklungen realisiert werden. Die fünf Wicklungen sind dabei auf zwei ringförmigen Transformatorkernen angeordnet, d.h. gewickelt. Als ringförmiger Transformatorkern ist dabei beispielsweise ein toroidförmiger Transformatorkern anzusehen. Ringförmig muss jedoch hierbei nicht kreisförmig oder oval bedeuten, sondern kann vielmehr auch eine rechteckförmige oder quadratische geschlossene Transformatorkernstruktur umfassen. Insbesondere kann eine solche geschlossene Transformatorkernstruktur beispielsweise durch einen U-förmigen Transformatorkern mit einem darüber angeordneten Joch realisiert werden (UI-Kern). Aber auch beliebige andere in sich geschlossene Transformatorkernstrukturen sind möglich. Auch können die beiden einzelnen Transformatorkerne als gemeinsamer Transformatorkern mit zwei in sich geschlossenen Transformatorkernstrukturen realisiert werden. Dies kann beispielsweise durch eine E-förmige Transformatorkernstruktur mit einem darüber angeordneten Joch realisiert werden (E-Kern).

Die als ringförmig oder geschlossen bezeichneten Transformatorkerne können, beispielsweis zur Erhöhung der Streuinduktivität, einen oder mehrere diskrete Luftspalte aufweisen. Beispielsweise kann zwischen einem Schenkel und einem Joch eines Transformatorkerns ein Luftspalt vorgesehen sein. Darüber hinaus können die Transformatorkerne auch ferromagnetische Pulverteilchen umfassen. Transformatorkerne mit ferromagnetische Pulverteilchen werden auch als "Pulverkerne" oder als Kerne mit einem verteilten Luftspalt bezeichnet.

Für die beiden hochspannungsseitigen Anschlüsse, beispielsweise für den einer externen Spannungsquelle zugeordneten Anschluss sowie den Hochspannungsanschluss eines Elektro- oder Hybridfahrzeugs sind jeweils zwei Wicklungen vorgesehen, wobei jeweils eine der beiden Wicklungen um den ersten Transformatorkern und eine der beiden Wicklungen jeweils um den zweiten Transformatorkern angeordnet ist. Eine dritte Wicklung, die beispielsweise einem Niedervoltbordnetz eines Elektro- oder Hybridfahrzeugs zugeordnet sein kann, kann um beide Transformatorkerne gemeinsam gewickelt werden. Insbesondere ist es auch möglich, diese Tertiärwicklung bei einer kombinierten Transformatorkernanordnung für den ersten Transformatorkern und den zweiten Transformatorkern um einen Schenkel zu wickeln, welcher beiden Transformatorkernen zugeordnet ist.

Durch ein geeignetes Ansteuern der einzelnen Transformatorwicklungen ist es möglich, gezielt die Energieübertragung zwischen den einzelnen Wicklungen zu steuern. Insbesondere kann bei einer Energieübertragung von den Primärwicklungen, welche beispielsweise einer externen Spannungsversorgung eines Elektro- oder Hybridfahrzeugs zugeordnet sein können, zu den Sekundärwicklungen, welche beispielsweise dem Hochvoltbordnetz eines Elektro- oder Hybridfahrzeugs zugeordnet sein können, gleichzeitig den Anteil der Energie zu steuern, welcher zu der Tertiärwicklung übertragen wird, wobei die Tertiärwicklung beispielsweise einem Niedervoltbordnetz eines Elektro- oder Hybridfahrzeugs zugeordnet sein kann.

Auf diese Weise kann mittels einer einzigen effizienten und kompakten Transformatoranordnung gezielt elektrische Energie zwischen drei Spannungssystemen übertragen werden, wobei zwischen allen drei Spannungssystemen eine galvanische Trennung realisiert werden kann.

In einer möglichen Ausführungsform umfassen der erste Transformatorkern und der zweite Transformatorkern einen gemeinsamen Schenkel. Insbesondere kann die Tertiärwicklung um diesen gemeinsamen Schenkel angeordnet sein. Wie zuvor bereits beschrieben, kann durch eine solche Transformatorkernanordnung, bei der die beiden Transformatorkerne als gemeinsame Transformatorkernstruktur realisiert werden, eine besonders effiziente und kompakte Transformatoranordnung realisiert werden.

In einer möglichen Ausführungsform des Dreiport-Spannungswandlers ist die erste Ansteuerschaltung dazu ausgelegt, zwischen dem Bereitstelen der ersten Wechselspannung an der ersten Primärwicklung und dem Bereitstellen der zweiten Wechselspannung an der zweiten Primärwicklung eine zeitliche Verzögerung einzustellen. Insbesondere kann die zeitliche Verzögerung in Abhängigkeit von einer Sollspannung an der Tertiärwicklung eingestellt werden.

Die erste Wechselspannung und die zweite Wechselspannung weisen in der Regel eine gleiche Frequenz auf. Das Bereitstellen der ersten Wechselspannung an der ersten Primärwicklung und das Bereitstellen der zweiten Wechselspannung an der zweiten Primärwicklung kann jeweils mit einer von 0 V ansteigenden Wechselspannung beginnen Auf diese Weise tritt durch das zeitlich versetzte Bereitstellen der ersten Wechselspannung und der zweiten Wechselspannung insbesondere bei einer gleichen Frequenz der beiden Wechselspannungen, ein Phasenunterschied zwischen den beiden Wechselspannungen auf.

Durch die Variation dieser zeitlichen Verzögerung zwischen dem Bereitstellen der ersten Wechselspannung und dem Bereitstellen der zweiten Wechselspannung an den Primärwicklungen kann der magnetische Fluss durch den Schenkel des Transformatorkerns, um den die Tertiärwicklung gewickelt ist, gesteuert werden. Auf diese Weise kann die Spannung an der Tertiärwicklung durch die zeitliche Verzögerung zwischen den beiden Wechselspannungen an den Primärwicklungen angepasst werden. Insbesondere kann auf diese Weise die Leistungsübertragung von der Primärwicklung zu der Tertiärwicklung gesteuert werden.

In einer möglichen Ausführungsform umfasst die erste Ansteuerschaltung einen ersten Primärresonanzschwingkreis, der mit der ersten Primärwicklung elektrisch gekoppelt ist. Ferner kann die erste Ansteuerschaltung einen zweiten Primärresonanzschwingkreis umfassen, der mit der zweiten Primärwicklung elektrisch gekoppelt ist. Die Resonanzschwingkreise auf der Primärseite des Dreiport-Spannungswandlers ermöglichen somit den Aufbau eines Gleichspannungs-Resonanz-Konverters. Insbesondere kann der Resonanzschwingkreis beispielsweise durch eine Serienschaltung einer Induktivität und einer Kapazität realisiert werden. Die Dimensionierung der Bauelemente kann dabei insbesondere auf die gewünschten Frequenzen in dem Resonanz-Konverter angepasst werden.

In einer möglichen Ausführungsform ist die erste Ansteuerschaltung dazu ausgelegt, an dem ersten Primär-Resonanzschwingkreis und an dem zweiten Primär-Resonanzschwingkreis jeweils eine rechteckförmige Spannung bereitzustellen. Insbesondere kann das Tastverhältnis der rechteckförmigen Spannungen in Abhängigkeit einer zu übertragenden elektrischen Leistung angepasst werden. Auf diese Weise die zu übertragende elektrische Leistung in dem Dreiport-Spannungswandler auf Grundlage des einzustellenden Tastverhältnisses angepasst und eingestellt werden. Dies ermöglicht eine besonders einfache Regelung der zu übertragenden elektrischen Leistung in den Dreiport-Spannungswandler.

In einer möglichen Ausführungsform umfasst die zweite Ansteuerschaltung einen Sekundär-Resonanzschwingkreis. Der Sekundär-Resonanzschwingkreis der zweiten Ansteuerschaltung kann insbesondere an einem Knotenpunkt mit der ersten Sekundärwicklung und der zweiten Sekundärwicklung elektrisch gekoppelt sein. Der Resonanzschwingkreis kann insbesondere eine Induktivität und eine Kapazität, welche in Serie geschaltet sind, umfassen. Die Dimensionierung der Bauelemente kann auf eine einzustellende Resonanzfrequenz angepasst werden. Ein derartiger Sekundär-Resonanzschwingkreis ermöglicht einen Resonanz-Spannungswandler, bei welchem auch über die Sekundärwicklungen elektrische Energie eingespeist werden kann.

In einer möglichen Ausführungsform umfasst die zweite Ansteuerschaltung einen ersten Sekundär-Resonanzschwingkreis, der mit der ersten Sekundärwicklung elektrisch gekoppelt ist und einen zweiten Sekundär-Resonanzschwingkreis, der mit der zweiten Sekundärwicklung elektrisch gekoppelt ist. Ferner kann die Gleichrichterschaltung einen Tertiär-Resonanzschwingkreis umfassen, der mit der Tertiärwicklung elektrisch gekoppelt ist. Auf diese Weise kann ein Resonanz-Spannungskonverter realisiert werden, ohne dass auf der Primärseite ein Resonanzschwingkreis erforderlich wäre.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der Erfindung hinzufügen.

### Kurze Beschreibung der Zeichnungen

Die vorliegende Erfindung wird nachfolgend anhand der in den schematischen Figuren der Zeichnungen angegebenen Ausführungsformen näher erläutert. Dabei zeigen:
Fig. 1: eine schematische Darstellung eines Transformators für einen Dreiport-Spannungswandler gemäß einer Ausführungsform;
Fig. 2: eine schematische Darstellung eines Transformators für einen Dreiport-Spannungswandler gemäß einer weiteren Ausführungsform;
Fig. 3: eine schematische Darstellung eines Prinzipschaltbilds für einen Dreiport-Spannungswandler gemäß einer Ausführungsform;
Fig. 4: eine schematische Darstellung der Zeitdiagramme, wie sie einer Ansteuerung eines Dreiport-Spannungswandlers gemäß einer Ausführungsform zugrundeliegen;
Fig. 5: eine schematische Darstellung eines Prinzipschaltbilds eines Dreiport-Spannungswandlers gemäß einer weiteren Ausführungsform;
Fig. 6: eine schematische Darstellung eines Prinzipschaltbilds eines Dreiport-Spannungswandlers gemäß einer weiteren Ausführungsform;
Fig. 7: ein Ablaufdiagramm, wie es einem Verfahren zum Übertragen von elektrischer Energie gemäß einer Ausführungsform zugrundeliegt; und
Fig. 8: ein Ablaufdiagramm, wie es einem Verfahren zum Übertragen von elektrischer Energie gemäß einer weiteren Ausführungsform zugrundeliegt.

### Beschreibung von Ausführungsformen

In der folgenden Beschreibung bezeichnen gleiche Bezugszeichen gleiche oder gleichartige Elemente.

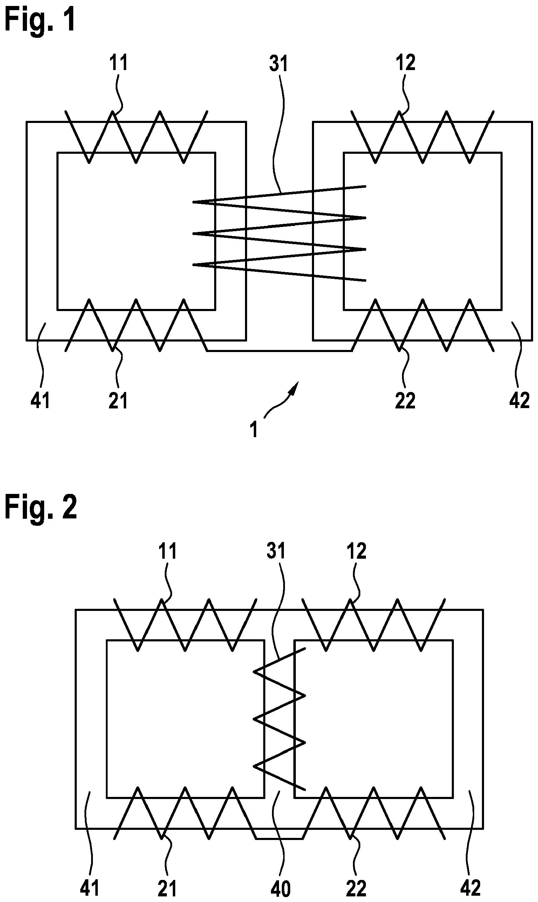

Fig. 1 zeigt eine schematische Darstellung eines Transformators 1, wie er beispielsweise für einen Dreiport-Spannungswandler eingesetzt werden kann. Der Transformator 1 umfasst einen ersten Transformatorkern 41 und einen zweiten Transformatorkern 42. Bei den beiden Transformatorkernen 41 und 42 handelt es sich um ringförmige Transformatorkerne. Als ringförmigen Transformatorkern kann dabei beispielsweise eine toroidförmige Transformatorkernstruktur angesehen werden. Ringförmig ist jedoch nicht auf kreisförmig oder ggf. oval beschränkt. Vielmehr kann als ringförmige Transformatorkernstruktur auch eine, insbesondere geschlossene, Struktur aus mehreren gerade verlaufenden Transformatorkernelementen angesehen werden, die beispielsweise eine rechteckförmige oder quadratische Struktur ausbilden. Beispielsweise kann eine solche geschlossene Transformatorkernstruktur aus einem U-förmigen Transformatorkern und einem darüber angeordneten Joch gebildet werden. Darüber hinaus sind als ringförmige Transformatorkerne selbstverständlich auch beliebige andere Transformatorkernstrukturen möglich, welche einen geschlossenen Transformatorkern bilden.

Die ringförmigen Transformatorkerne 41, 42 können gegebenenfalls einen oder mehrere diskrete Luftspalte aufweisen. Beispielsweise können zwischen einem Schenkel und einem Joch eines Transformatorkerns 41, 42 ein oder auch mehrere Luftspalte vorgesehen sein. Darüber hinaus können die Transformatorkerne 41, 42 auch ferromagnetische Pulverteilchen umfassen. Transformatorkerne mit ferromagnetischen Pulverteilchen werden auch als sogenannte Pulverkerne oder als Kerne mit einem verteilten Luftspalt bezeichnet. Hierdurch ist es beispielsweise möglich, den magnetischen Fluss in dem jeweiligen Transformatorkern 41, 42 zu beeinflussen.

Der Transformator 1 umfasst darüber hinaus fünf Wicklungen, 11, 12, 21, 22, 31. Diese fünf Wicklungen 11, 12, 21, 22, 31 sind drei Spannungssystemen zugeordnet. Eine erste Primärwicklung 11 und eine zweite Primärwicklung 12 sind einem ersten Spannungssystem zugeordnet. Eine erste Sekundärwicklung 21 und eine zweite Sekundärwicklung 22 sind einem zweiten Spannungssystem zugeordnet. Eine Tertiärwicklung 31 ist einem dritten Spannungssystem zugeordnet. Die erste Primärwicklung 11 ist an dem ersten Transformatorkern 41 angeordnet, d.h. die erste Primärwicklung 11 ist an einem vorbestimmten Bereich um den ersten Transformatorkern 41 herum gewickelt. Die zweite Primärwicklung 12 ist an dem zweiten Transformatorkern 42 angeordnet. Die erste Primärwicklung 11 und die zweite Primärwicklung 12 können dabei gleich oder zumindest annähernd gleich ausgebildet sein. Insbesondere können die erste Primärwicklung 11 und die zweite Primärwicklung 12 die gleiche Anzahl von Windungen aufweisen. Die erste Sekundärwicklung 21 ist an dem ersten Transformatorkern 41 angeordnet, und die zweite Sekundärwicklung 22 ist an dem zweiten Transformatorkern 42 angeordnet. Die erste Sekundärwicklung 21 und die zweite Sekundärwicklung 22 können insbesondere gleich ausgebildet sein und beispielsweise eine gleiche Anzahl von Windungen aufweisen. Die erste Sekundärwicklung 21 und die zweite Sekundärwicklung 22 können an einem Knotenpunkt K miteinander elektrisch verbunden sein. Durch die oben beschriebene Anordnung kann die erste Primärwicklung 11 in dem ersten Transformatorkern 41 einen magnetischen Fluss hervorrufen, der wiederum in der ersten Sekundärwicklung 21 eine elektrische Spannung induziert. Analog kann durch die zweite Primärwicklung 12 in dem zweiten Transformatorkern 42 ein magnetischer Fluss hervorgerufen werden, der in der zweiten Sekundärwicklung 22 eine elektrische Spannung induziert.

Darüber hinaus umfasst der Transformator 1 eine Tertiärwicklung 31, welche sowohl an dem ersten Transformatorkern 41 als auch an dem zweiten Transformatorkern 42 angeordnet ist. Mit anderen Worten, die Windungen der Tertiärwicklung 31 umschließen jeweils an einem vorbestimmten Bereich sowohl den ersten Transformatorkern 41 als auch den zweiten Transformatorkern 42. Auf diese Weise kann in der Tertiärwicklung 31 eine elektrische Spannung induziert werden, welche zu der Summe der magnetischen Flüsse in den beiden Transformatorkernen 41 und 42 korrespondiert. Hierbei ist jedoch auch die Richtung der magnetischen Flüsse zu berücksichtigen. Ist der magnetische Fluss durch die Tertiärwicklung 31 in dem ersten Transformatorkern 41 entgegengesetzt zu dem magnetischen Fluss durch die Tertiärwicklung 31 in dem zweiten Transformatorkern 42, so können sich die beiden magnetischen Flüsse zumindest annähernd aufheben, sodass in der Summe in der Tertiärwicklung 31 keine oder ggf. nur eine geringe elektrische Spannung induziert wird.

Fig. 2 zeigt eine schematische Darstellung eines Transformators 1 gemäß einer weiteren Ausführungsform. Der Transformator 1 in dieser Ausführungsform entspricht weitestgehend dem Transformator 1 aus Fig. 1. Daher gelten die in Zusammenhang mit Fig. 1 gemachten Aussagen auch für Fig. 2. Der Transformator 1 in Fig. 2 unterscheidet sich von dem Transformator in Fig. 1 lediglich darin, dass der erste Transformatorkern 41 und der zweite Transformatorkern 42 durch einen gemeinsamen Transformatorkern gebildet werden. Insbesondere sind die beiden Schenkel des ersten Transformatorkerns 41 und des zweiten Transformatorkerns 42, welche von der Tertiärwicklung 31 umwickelt werden, zu einem einzelnen Schenkel 40 zusammengefasst. Ein solcher Transformatorkern kann beispielsweise durch eine E-förmige Struktur mit einem darüber angeordneten gerade verlaufenden Joch gebildet werden. Jedoch sind auch andere Möglichkeiten zur Bildung eines kombinierten Transformatorkerns gemäß Fig. 2 möglich.

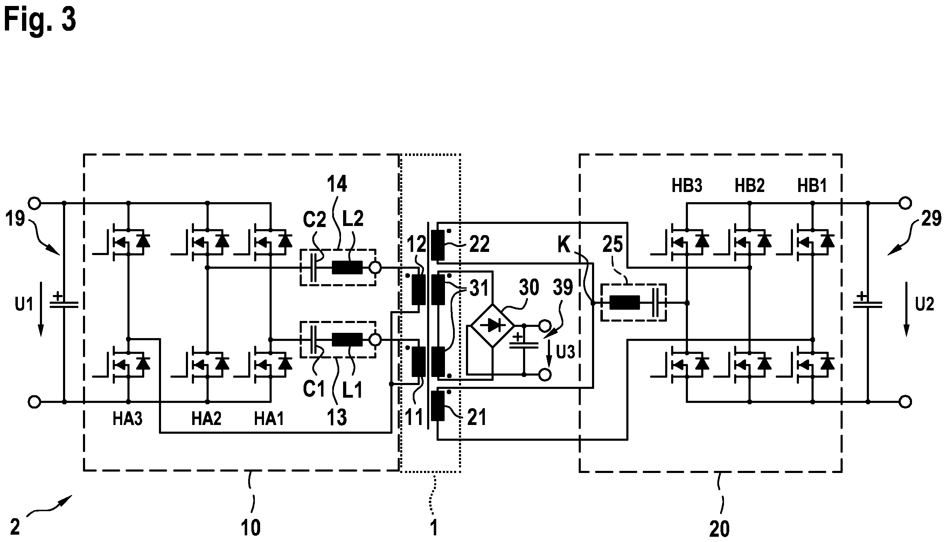

Fig. 3 zeigt eine schematische Darstellung eines Prinzipschaltbilds eines Dreiport-Spannungswandlers 2 gemäß einer Ausführungsform. Die erste Primärwicklung 11 und die zweite Primärwicklung 12 können von einer ersten Ansteuerschaltung 10 einzeln angesteuert werden. In dem hier dargestellten Ausführungsbeispiel umfasst die erste Ansteuerschaltung 10 einen Gleichspannungsanschluss 19, an dem eine Gleichspannung U1 bereitgestellt werden kann. Weiterhin umfasst die erste Ansteuerschaltung 10 drei Halbbrücken HA1, HA2 und HA3 mit jeweils zwei Schaltelementen, beispielsweise zwei Halbleiterschaltelementen. Die drei Halbbrücken HA1, HA2 und HA3 sind an einem gemeinsamen Knotenpunkt mit dem positiven Anschluss des Gleichspannungsanschlusses 19 elektrisch gekoppelt, und der negative Anschluss des Gleichspannungsanschlusses 19 ist an einem gegenüberliegenden Knotenpunkt mit den drei Halbbrücken HA1, HA2, HA3 elektrisch gekoppelt. Zwischen einem mittleren Knotenpunkt der ersten Halbbrücke HA1 und einem Anschluss der ersten Primärwicklung 11 kann ein erster Primär-Resonanzschwingkreis 13, beispielsweise ein Serienresonanzschwingkreis aus einer ersten Induktivität L1 und einer ersten Kapazität C1 vorgesehen sein. Analog kann zwischen einem mittleren Knotenpunkt der zweiten Halbbrücke HA2 und einem Anschluss der zweiten Primärwicklung 12 ein zweiter Primär-Resonanzschwingkreis 14 vorgesehen sein. Auch dieser zweite Primär-Resonanzschwingkreis 14 kann beispielsweise mittels eines Serienresonanzschwingkreises aus einer zweiten Induktivität L2 und einer zweiten Kapazität C2 gebildet werden. Die beiden anderen Anschlüsse der ersten Primärwicklung 11 und der zweiten Primärwicklung 12 sind mit einem mittleren Knotenpunkt der dritten Halbbrücke HA3 elektrisch verbunden.

Die erste und die zweite Sekundärwicklung 21, 22 können mit einer zweiten Ansteuerschaltung 20 verbunden werden. Die zweite Ansteuerschaltung 20 kann die in der ersten Sekundärwicklung 21 und der zweiten Sekundärwicklung 22 induzierten elektrischen Spannungen gleichrichten und an einem Anschluss 29 der zweiten Ansteuerschaltung 20 bereitstellen. Ferner kann die zweite Ansteuerschaltung 20 auch eine am Anschluss 29 bereitgestellte Gleichspannung U2 umformen, um die erste Sekundärwicklung 21 und die zweite Sekundärwicklung 22 anzuregen. Die zweite Ansteuerschaltung 20 umfasst beispielsweise drei Halbbrücken HB1, HB2, HB3. Jede Halbbrücke HB1, HB2, HB3 kann beispielsweise zwei Halbleiterschaltelemente umfassen. Die drei Halbbrücken HB1, HB2, HB3 der zweiten Ansteuerschaltung können auf der einen Seite mit dem positiven Anschlusspunkt des Anschlusses 29 verbunden sein und auf der anderen Seite mit einem negativen Anschlusselement des Anschlusses 19. Ein Anschluss der ersten Sekundärwicklung 21 und ein Anschluss der zweiten Sekundärwicklung 22 können an einem Knotenpunkt K elektrisch miteinander verbunden sein. Dieser Knotenpunkt K kann beispielsweise über einen Sekundär-Resonanzschwingkreis 25, insbesondere einen Serienresonanzschwingkreis aus einer Induktivität und einer Kapazität, mit einem mittleren Knotenpunkt der dritten Halbbrücke HB3 verbunden sein. Ein mittlerer Knotenpunkt der ersten Halbbrücke HB1 und der zweiten Halbbrücke HB2 kann jeweils mit dem anderen Anschluss der ersten Sekundärwicklung 21 bzw. der zweiten Sekundärwicklung 22 verbunden sein.

Die Anschlüsse der Tertiärwicklung 31 können mit einer Gleichrichterschaltung 30 verbunden werden. Auf diese Weise kann eine in der Tertiärwicklung 31 induzierte elektrische Spannung gleichgerichtet werden und die gleichgerichtete Spannung U3 kann an einem Anschluss 39 der Gleichrichterschaltung 30 bereitgestellt werden.

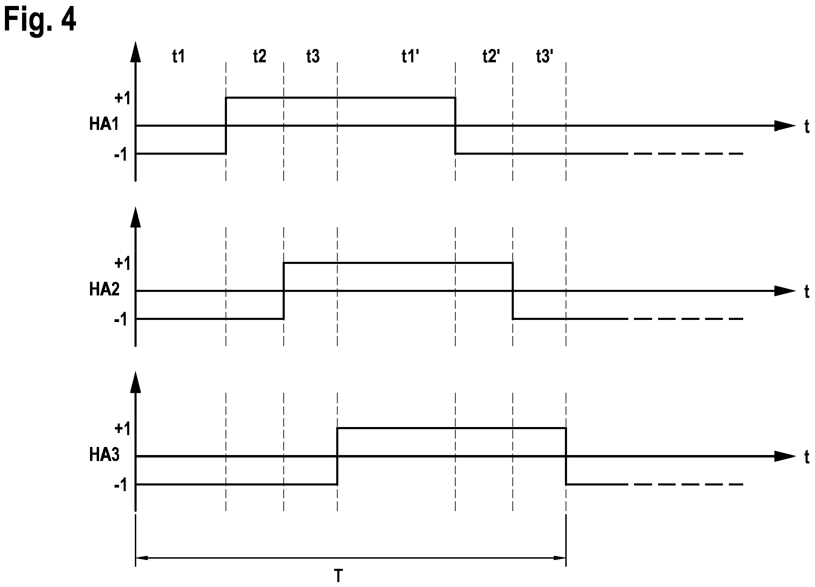

Fig. 4 zeigt eine schematische Darstellung der zeitlichen Verläufe der Schaltzustände für die Ansteuerung eines Dreiport-Spannungswandlers 2. hierbei sind die Schaltzustände der Halbbrücken HA1, HA2, HA3 der ersten Ansteuerschaltung 10 dargestellt. Ein Wert von -1 bezeichnet hierbei jeweils, dass das untere Schaltelement der jeweiligen Halbbrücke HA1, HA2, HA3 geschlossen ist und das obere Schaltelement der entsprechenden Halbbrücke HA1, HA2, HA3 geöffnet ist. Analog bezeichnet ein Wert von +1, dass das obere Schaltelement der jeweiligen Hallbrücke HA1, HA2, HA3 geschlossen ist und das untere Schaltelement geöffnet ist. Die Ansteuerung der Halbbrücken HA1, HA2, HA3 insbesondere der Schaltelemente in diesen Halbbrücken HA1, HA2, HA3 kann hierbei periodisch erfolgen. Die Periodendauer ist hierbei mit T gekennzeichnet. In einem ersten Zeitabschnitt t1 sind die unteren Schaltelemente der ersten und der zweiten Halbbrücke HA1, HA2 geschlossen und die korrespondierenden oberen Schaltelemente geöffnet. In der dritten Halbbrücke HA3 ist das obere Schaltelement geschlossen und das korrespondierende untere Schaltelement geöffnet. In einem zweiten Zeitabschnitt t2 wird daraufhin das untere Schaltelement der ersten Halbbrücke HA1 geöffnet und das obere Schaltelement der ersten Halbbrücke HA1 geschlossen. In einem dritten Zeitabschnitt t3 wird auch in der zweiten Halbbrücke HA2 das untere Schaltelement geöffnet und das obere Schaltelement geschlossen. Die Summe der drei Zeitabschnitte t1, t2 und t3 bildet dabei jeweils eine halbe Periodendauer T. Es schließen sich drei weitere Zeitabschnitte t1', t2' und t3' an, bei welchen die Schaltzustände jeweils genau umgekehrt wie in den Zeitabschnitten t1, t2 und t3 sind. Während des ersten Zeitabschnitts t1, t1' erzeugt die erste Primärwicklung 11 in dem ersten Transformatorkern 41 ein magnetisches Feld, welches in der ersten Sekundärwicklung 21 eine elektrische Spannung induziert. In gleicher Weise erzeugt die zweite Primärwicklung 12 in dem zweiten Transformatorkern 42 ein magnetisches Feld, welches in der zweiten Sekundärwicklung 22 eine elektrische Spannung induziert. Im Bereich der beiden Transformatorkerne 41, 42, welcher von der Tertiärwicklung 31 umwickelt ist, heben sich die magnetischen Felder dabei zumindest annähernd auf, sodass in der Tertiärwicklung 31 keine signifikante Spannung induziert wird. Auf diese Weise kann elektrische Energie von den Primärwicklungen 11, 12 zu den Sekundärwicklungen 21, 22 übertragen werden. In dem zweiten Zeitabschnitt t2, t2' wird in dem ersten Transformatorkern 41 durch die erste Primärwicklung 11 kein magnetisches Feld mehr hervorgerufen. Es wird lediglich durch die zweite Primärwicklung 21 in dem zweiten Transformatorkern 42 ein magnetisches Feld erzeugt. Entsprechend induziert dieses elektrische Feld sowohl in der zweiten Sekundärwicklung 21 als auch in der Tertiärwicklung 31 eine elektrische Spannung. Auf diese Weise kann elektrische Energie von der zweiten Primärwicklung 21 sowohl zu der zweiten Sekundärwicklung 21 als auch zu der Tertiärwicklung 31 übertragen werden.

In dem dritten Zeitabschnitt t3, t3' wird weder die erste Primärwicklung 21 noch die zweite Primärwicklung 22 angeregt, sodass in keinem der magnetischen Kerne 41, 42 ein magnetisches Feld hervorgerufen wird. Entsprechend erfolgt auch keine Übertragung von elektrischer Energie zwischen den einzelnen Windungen.

Wie aus der vorausgegangenen Beschreibung zu erkennen ist, kann durch Variationen der einzelnen Zeitabschnitte t1, t2, t3 bzw. t1', t2', t3' die Menge an zu übertragender Energie geregelt werden. Soll beispielsweise ausschließlich elektrische Energie von den Primärwicklungen 11, 12 zu den Sekundärwicklungen 21, 22 übertragen werden, so werden die Schaltelemente in der ersten Halbbrücke HA1 und der zweiten Halbbrücke HA2 der ersten Ansteuerschaltung 10 jeweils gleich angesteuert. Mit anderen Worten, die mittlere Zeitspane t2, t2' ist Null. Das Verhältnis von t1 zu t3, mit t2 = 0, steuert dabei die Menge der zu übertragenden Energie.

Soll darüber hinaus auch elektrische Energie zu der Tertiärwicklung 31 übertragen werden, so kann dies durch eine zeitliche Verzögerung der Ansteuersignale für die erste Halbbrücke HA1 in Bezug auf die zweite Halbbrücke HA2 erzielt werden. Dies wird beispielsweise durch einen Zeitabschnitt t2, t2' > 0 erzielt. Je größer der zeitliche Versatz t2, t2' und somit die Verzögerung zwischen den Ansteuersignalen für die erste Halbbrücke HA1 und die zweite Halbbrücke HA2 ist, desto größer ist die Menge an elektrischer Energie, welche an die Tertiärwicklung 31 übertragen wird.

Durch das Anzusteuern der ersten Halbbrücke HA1 und der zweiten Halbbrücke HA2 wird jeweils an der ersten Primärwicklung 11 sowie der zweiten Primärwicklung 12 eine elektrische Wechselspannung bereitgestellt. Hierbei beginnt das Bereitstellen der elektrischen Wechselspannung jeweils mit einer Wechselspannung, welche beginnend von 0 Volt ansteigend. Bei einer gleichen Frequenz der Wechselspannungen an der Primärwicklung 11 und der Sekundärwicklung 12 ergibt sich somit zwischen der Wechselspannung an der ersten Primärwicklung 11 und der Wechselspannung an der zweiten Primärwicklung 12 ein Phasenunterschied, der zu dem zeitlichen Versatz t2, t2' korrespondiert.

Die an den Anschlüssen der Sekundärwicklungen 21, 22 anliegenden Wechselspannungen können daraufhin von der Ansteuerschaltung 20 gleichgerichtet werden. Beispielsweise kann hierzu eine aktive Gleichrichterschaltung mittels der in der Ansteuerschaltung 20 vorgesehenen Halbbrücken HB1, HB2, HB3 realisiert werden. Die an den Anschlüssen der Tertiärwicklung 31 anliegende Wechselspannung kann mittels einer Gleichrichterschaltung 30, insbesondere einer aktiven oder passiven Gleichrichterschaltung realisiert werden.

Neben der vorausgegangenen Übertragung von elektrischer Energie von den Primärwicklungen 11, 12 zu den Sekundärwicklungen 21, 22 und gleichzeitig zur Tertiärwicklung 31 ist auch eine Übertragung von elektrischer Energie von den Sekundärwicklungen 21, 22 zur Tertiärwicklung 31 möglich, ohne dass hierbei eine Ansteuerung der Primärwicklungen 11, 12 erfolgen muss. Hierzu werden von der zweiten Ansteuerschaltung 20 die erste Sekundärwicklung 21 und die zweite Sekundärwicklung 22 angeregt. Die Anregung der zweiten Sekundärwicklung 22 erfolgt dabei mit umgekehrter Polarität wie die Anregung der ersten Sekundärwicklung 21. Auf diese Weise erzeugen die von den beiden Sekundärwicklungen 21, 22 hervorgerufenen magnetischen Felder in dem von der Tertiärwicklung 31 umgebenen Bereich der Transformatorkerne 41, 42 einen in die gleiche Richtung verlaufenden magnetischen Fluss, der entsprechend eine elektrische Spannung in der Tertiärwicklung 31 hervorruft. Da die beiden magnetischen Flüsse in dem ersten Transformatorkern 41 und dem zweiten Transformatorkern 41 in diesem Fall entgegengesetzt sind, heben sich die in der ersten Primärwicklung 11 und der zweiten Primärwicklung 12 hervorgerufenen elektrischen Spannungen gegenseitig auf.

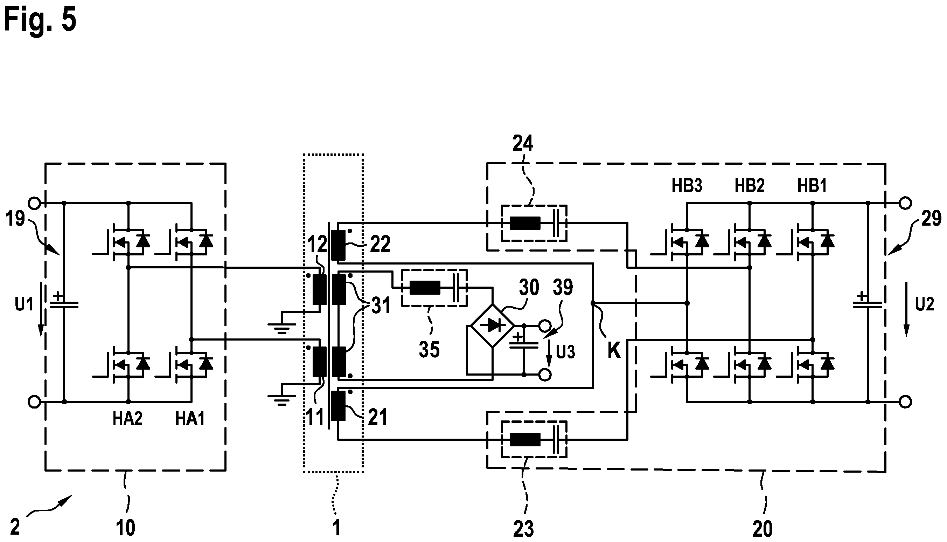

Fig. 5 zeigt eine schematische Darstellung eines Prinzipschaltbilds für einen Dreiport-Spannungswandler 2 gemäß einer weiteren Ausführungsform. Die Schaltung entspricht dabei weitestgehend der Schaltungsanordnung gemäß Fig. 3. Somit gelten für diese Ausführungsform, soweit sinnvoll, auch die bereits in Fig. 3 gemachten Ausführungen. Die Schaltungsanordnung gemäß Fig. 5 unterscheidet sich von der Schaltungsanordnung von Fig. 3 lediglich dadurch, dass die Primär-Resonanzschwingkreise 13, 14 entfallen. Für eine resonante Anregung des Dreiport-Spannungswandlers 2 sind in dieser Ausführungsform anstelle der beiden Primär-Resonanzschwingkreise 13, 14 zwei Sekundär-Resonanzschwingkreise 23, 24 sowie ein Tertiär-Resonanzschwingkreis 35 vorgesehen. Auf diese Weise kann auch ohne Resonanzschwingkreise an den Primärwicklungen 11, 12 eine resonante Anregung erreicht werden.

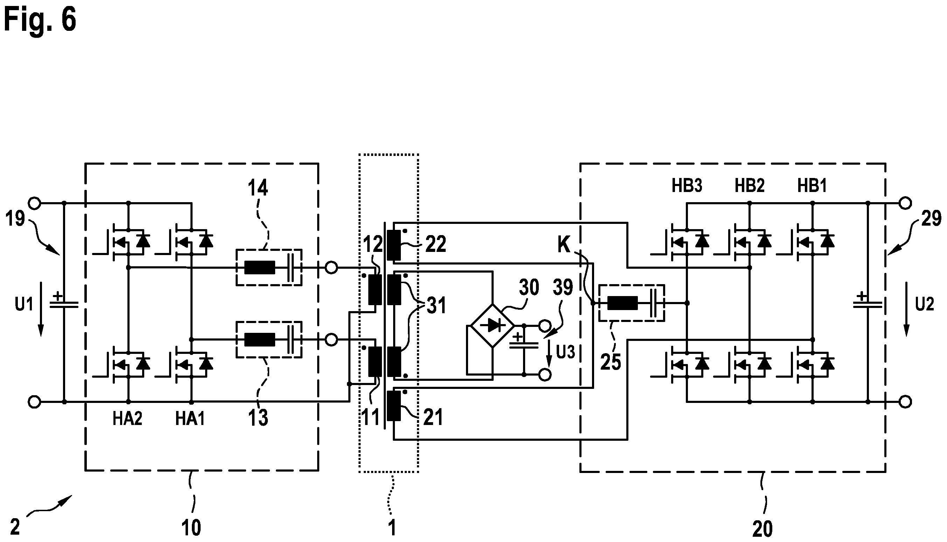

Fig. 6 zeigt eine schematische Darstellung eines Dreiport-Spannungswandlers 2 gemäß einer Ausführungsform. Dieser Dreiport-Spannungswandler 2 unterscheidet sich von dem Spannungswandler gemäß Fig. 4 darin, dass die erste Ansteuerschaltung 10 lediglich zwei Halbbrücken HA1 und HA2 umfasst. Die dritte Halbbrücke HA3 für die erste Ansteuerschaltung 10 kann somit entfallen.

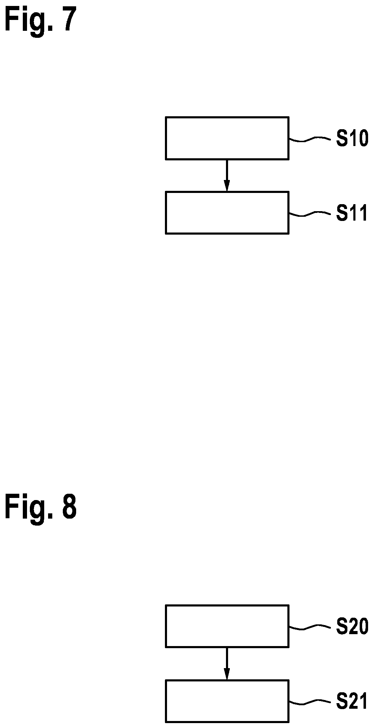

Fig. 7 zeigt eine schematische Darstellung eines Ablaufdiagramms, wie es einem Verfahren zum Übertragen von elektrischer Energie mit einem der zuvor beschriebenen Transformator 1, beispielsweis mittels eines Dreiport-Spannungswandlers 2 zugrundeliegt. In Schritt S10 wird an der ersten Primärwicklung 11 eine erste Wechselspannung bereitgestellt, und in Schritt S11 wird an der zweiten Primärwicklung 12 eine zweite Wechselspannung bereitgestellt. Das Bereitstellen der zweiten Wechselspannung an der zweiten Primärwicklung 12 kann mit einer zeitlichen Verzögerung t2, t2' in Bezug auf das Bereitstellen der ersten Wechselspannung erfolgen. Insbesondere kann die zeitliche Verzögerung t2, t2' in Abhängigkeit von einer Sollspannung an der Tertiärwicklung 31 eingestellt werden.

Darüber hinaus gelten für dieses Verfahren, wie auch für das nachfolgende Verfahren sämtliche Ausführungen, die bereits weiter oben in Zusammenhang mit dem Dreiport-Spannungswandler ausgeführt wurden.

Fig. 8 zeigt eine schematische Darstellung eines Ablaufdiagramms für ein weiteres Verfahren zum Übertragen von elektrischer Energie in einem zuvor beschriebenen Transformator 1, beispielsweise mittels eines Dreiport-Spannungswandlers. In Schritt S20 wird an der ersten Sekundärwicklung 21 eine erste Wechselspannung bereitgestellt, und in Schritt S21 wird an der zweiten Sekundärwicklung 22 eine zweite Wechselspannung bereitgestellt. Das Bereitstellen der beiden Wechselspannungen erfolgt dabei insbesondere derart, dass sich der magnetische Fluss, der durch die erste Wechselspannung hervorgerufen wird, und der magnetische Fluss, der durch die zweite Wechselspannung hervorgerufen wird, in der Tertiärwicklung 31 in die gleiche Richtung verlaufen und sich somit ergänzen. Insbesondere kann somit an der ersten Sekundärwicklung 21 eine Wechselspannung angelegt werden, die in Bezug auf die Wechselspannung an der zweiten Sekundärwicklung 22 eine entgegengesetzte Polarität aufweist, die Wechselspannungen sind im 180° phasenverschoben.

Zusammenfassend betrifft die vorliegende Erfindung eine galvanisch getrennte Übertragung elektrischer Energie zwischen drei Spannungssystemen. Hierzu ist ein Transformator vorgesehen, welcher insgesamt fünf Wicklungen umfasst. Durch gezieltes Ansteuern der einzelnen Wicklungen kann dabei die Übertragung zwischen den einzelnen Spannungssystemen gesteuert werden.

## Patentansprüche

1. Dreiport-Spannungswandler (2) mit einem Transformator (1) wobei der Transformator (1)
einen ersten ringförmigen Transformatorkern (41);
einen zweiten ringförmigen Transformatorkern (42);
eine erste Primärwicklung (11), die an dem ersten Transformatorkern (41) angeordnet ist;
eine zweite Primärwicklung (12), die an dem zweiten Transformatorkern (42) angeordnet ist;
eine erste Sekundärwicklung (21), die an dem ersten Transformatorkern (41) angeordnet ist;
eine zweite Sekundärwicklung (22), die an dem zweiten Transformatorkern (42) angeordnet ist; und
eine Tertiärwicklung (31), die an dem ersten Transformatorkern (41) und dem zweiten Transformatorkern (42) angeordnet ist,
umfasst,
wobei der Dreiport-Spannungswandler (2)
eine erste Ansteuerschaltung (10), die dazu ausgelegt ist, an der ersten Primärwicklung (11) eine erste Wechselspannung bereitzustellen und an der zweiten Primärwicklung (12) eine zweite Wechselspannung bereitzustellen;
und eine Gleichrichterschaltung (30), die dazu ausgelegt ist, eine an der Tertiärwicklung (31) anliegende Wechselspannung gleichzurichten,
umfasst,
wobei der Dreiport-Spannungswandler (2) eine zweite Ansteuerschaltung (20), die dazu ausgelegt ist, eine an der ersten Sekundärwicklung (21) anliegende Wechselspannung gleichzurichten und eine an der zweiten Sekundärwicklung (22) anliegende Wechselspannung gleichzurichten, oder an der ersten Sekundärwicklung (21) eine erste Wechselspannung bereitzustellen und an der zweiten Sekundärwicklung (22) eine zweite Wechselspannung bereitzustellen, umfasst.

2. Dreiport-Spannungswandler (2) mit einem Transformator (1) nach Anspruch 1, wobei der erste Transformatorkern (41) und der zwei Transformatorkern (42) einen gemeinsamen Schenkel (40) umfassen, an dem die Tertiärwicklung (31) angeordnet ist.

3. Dreiport-Spannungswandler (2) nach Anspruch 1 oder 2, wobei die erste Ansteuerschaltung (10) dazu ausgelegt ist, zwischen dem Bereitstellen der ersten Wechselspannung an der ersten Primärwicklung (11) und dem Bereitstellen der zweiten Wechselspannung an der zweiten Primärwicklung (12) eine zeitliche Verzögerung (t2, t2') vorzusehen, wobei die zeitliche Verzögerung (t2, t2') in Abhängigkeit von einer Sollspannung an der Tertiärwicklung (31) einstellbar ist.

4. Dreiport-Spannungswandler (2) nach einem der vorhergehenden Ansprüche, wobei die erste Ansteuerschaltung (10) einen ersten Primär-Resonanzschwingkreis (13) umfasst, der mit der ersten Primärwicklung (11) elektrisch gekoppelt ist, und einen zweiten Primär-Resonanzschwingkreis (14), der mit der zweiten Primärwicklung (12) elektrisch gekoppelt ist.

5. Dreiport-Spannungswandler (2) nach Anspruch 4, wobei die erste Ansteuerschaltung (10) dazu ausgelegt ist, an dem ersten Primär-Resonanzschwingkreis (13) und an dem zweiten Primär-Resonanzschwingkreis (14) jeweils eine rechteckförmige Spannung bereitzustellen, und wobei ein Tastverhältnis der rechteckförmigen Spannungen in Abhängigkeit einer zu übertragenden elektrischen Leistung anpassbar ist.

6. Dreiport-Spannungswandler (2) nach einem der vorhergehenden Ansprüche, wobei die zweite Ansteuerschaltung (20) einen Sekundär-Resonanzschwingkreis (25) umfasst, der an einem Knotenpunkt (K) mit der ersten Sekundärwicklung (21) und der zweiten Sekundärwicklung (22) elektrisch gekoppelt ist.

7. Dreiport-Spannungswandler (2) nach einem der Ansprüche 1 bis 5, wobei die zweite Ansteuerschaltung (20) einen ersten Sekundär-Resonanzschwingkreis (23) umfasst, der mit der ersten Sekundärwicklung (21) elektrisch gekoppelt ist, und einen zweiten Sekundär-Resonanzschwingkreis (24), der mit der zweiten Sekundärwicklung (22) elektrisch gekoppelt ist; und
wobei die Gleichrichterschaltung (30) einen Tertiär-Resonanzschwingkreis (35) umfasst, der mit der Tertiärwicklung (31) elektrisch gekoppelt ist.

## Claims

1. Three-port voltage converter (2), comprising a transformer (1),
wherein the transformer (1) comprises
a first ring-shaped transformer core (41);
a second ring-shaped transformer core (42);
a first primary winding (11) that is arranged on the first transformer core (41);
a second primary winding (12) that is arranged on the second transformer core (42);
a first secondary winding (21) that is arranged on the first transformer core (41);
a second secondary winding (22) that is arranged on the second transformer core (42); and
a tertiary winding (31) that is arranged on the first transformer core (41) and the second transformer core (42),
wherein the three-port voltage converter (2) comprises a first driver circuit (10) that is designed to provide a first AC voltage at the first primary winding (11) and to provide a second AC voltage at the second primary winding (12);
and a rectifier circuit (30) that is designed to rectify an AC voltage present at the tertiary winding (31), wherein the three-port voltage converter (2) comprises a second driver circuit (20) that is designed to rectify an AC voltage present at the first secondary winding (21) and to rectify an AC voltage present at the second secondary winding (22), or to provide a first AC voltage at the first secondary winding (21) and to provide a second AC voltage at the second secondary winding (22).

2. Three-port voltage converter (2) comprising a transformer (1) according to Claim 1,
wherein the first transformer core (41) and the second transformer core (42) comprise a common limb (40), around which the tertiary winding (31) is arranged.

3. Three-port voltage converter (2) according to Claim 1 or 2, wherein the first driver circuit (10) is designed to provide a time delay (t2, t2') between the provision of the first AC voltage at the first primary winding (11) and the provision of the second AC voltage at the second primary winding (12), wherein the time delay (t2, t2') is adjustable depending on a target voltage at the tertiary winding (31).

4. Three-port voltage converter (2) according to one of the preceding claims, wherein the first driver circuit (10) comprises a first primary resonant circuit (13) that is electrically coupled to the first primary winding (11), and a second primary resonant circuit (14) that is electrically coupled to the second primary winding (12).

5. Three-port voltage converter (2) according to Claim 4, wherein the first driver circuit (10) is designed to provide a respective square-wave voltage to the first primary resonant circuit (13) and to the second primary resonant circuit (14), and wherein a duty cycle of the square-wave voltages is adaptable depending on an electric power to be transferred.

6. Three-port voltage converter (2) according to one of the preceding claims, wherein the second driver circuit (20) comprises a secondary resonant circuit (25) that is electrically coupled to the first secondary winding (21) and to the second secondary winding (22) at a node (K).

7. Three-port voltage converter (2) according to one of Claims 1 to 5, wherein the second driver circuit (20) comprises a first secondary resonant circuit (23) that is electrically coupled to the first secondary winding (21), and a second secondary resonant circuit (24) that is electrically coupled to the second secondary winding (22); and
wherein the rectifier circuit (30) comprises a tertiary resonant circuit (35) that is electrically coupled to the tertiary winding (31).

## Revendications

1. Convertisseur de tension à trois ports (2) pourvu d'un transformateur (1),
dans lequel le transformateur (1) comprend
un premier noyau de transformateur annulaire (41) ;
un deuxième noyau de transformateur annulaire (42) ;
un premier enroulement primaire (11) qui est disposé sur le premier noyau de transformateur (41) ;
un deuxième enroulement primaire (12) qui est disposé sur le deuxième noyau de transformateur (42) ;
un premier enroulement secondaire (21) qui est disposé sur le premier noyau de transformateur (41) ;
un deuxième enroulement secondaire (22) qui est disposé sur le deuxième noyau de transformateur (42) ; et
un enroulement tertiaire (31) qui est disposé sur le premier noyau de transformateur (41) et le deuxième noyau de transformateur (42),
dans lequel le convertisseur de tension à trois ports (2) comprend
un premier circuit de pilotage (10) qui est conçu pour fournir une première tension alternative au niveau du premier enroulement primaire (11), et pour fournir une deuxième tension alternative au niveau du deuxième enroulement primaire (12) ;
et un circuit redresseur (30) qui est conçu pour redresser une tension alternative appliquée à l'enroulement tertiaire (31),
dans lequel le convertisseur de tension à trois ports (2) comprend un deuxième circuit de pilotage (20) qui est conçu pour redresser une tension alternative appliquée au premier enroulement secondaire (21), et pour redresser une tension alternative appliquée au deuxième enroulement secondaire (22), ou pour fournir une première tension alternative au niveau du premier enroulement secondaire (21) et pour fournir une deuxième tension alternative au niveau du deuxième enroulement secondaire (22).

2. Convertisseur de tension à trois ports (2) pourvu d'un transformateur (1) selon la revendication 1, dans lequel le premier noyau de transformateur (41) et le deuxième noyau de transformateur (42) comprennent une branche commune (40) sur laquelle est disposé l'enroulement tertiaire (31).

3. Convertisseur de tension à trois ports (2) selon la revendication 1 ou 2, dans lequel le premier circuit de pilotage (10) est conçu pour prévoir une temporisation (t2, t2') entre la fourniture de la première tension alternative au niveau du premier enroulement primaire (11) et la fourniture de la deuxième tension alternative au niveau du deuxième enroulement primaire (12), dans lequel la temporisation (t2, t2') est réglable en fonction d'une tension de consigne au niveau de l'enroulement tertiaire (31).

4. Convertisseur de tension à trois ports (2) selon l'une quelconque des revendications précédentes, dans lequel le premier circuit de pilotage (10) comprend un premier circuit de résonance primaire (13) qui est couplé électriquement au premier enroulement primaire (11), et un deuxième circuit de résonance primaire (14) qui est couplé électriquement au deuxième enroulement primaire (12).

5. Convertisseur de tension à trois ports (2) selon la revendication 4, dans lequel le premier circuit de pilotage (10) est conçu pour fournir au niveau du premier circuit de résonance primaire (13) et au niveau du deuxième circuit de résonance primaire (14) respectivement une tension rectangulaire, et dans lequel un rapport cyclique des tensions rectangulaires peut être adapté en fonction d'une puissance électrique à transmettre.

6. Convertisseur de tension à trois ports (2) selon l'une quelconque des revendications précédentes, dans lequel le deuxième circuit de pilotage (20) comprend un circuit de résonance secondaire (25) qui est couplé électriquement au premier enroulement secondaire (21) et au deuxième enroulement secondaire (22) au niveau d'un nœud (K).

7. Convertisseur de tension à trois ports (2) selon l'une quelconque des revendications 1 à 5, dans lequel le deuxième circuit de pilotage (20) comprend un premier circuit de résonance secondaire (23) qui est couplé électriquement au premier enroulement secondaire (21), et un deuxième circuit de résonance secondaire (24) qui est couplé électriquement au deuxième enroulement secondaire (22) ; et
dans lequel le circuit redresseur (30) comprend un circuit de résonance tertiaire (35) qui est couplé électriquement à l'enroulement tertiaire (31).
